**Europäisches Patentamt**

(19) **European Patent Office**

**Office européen des brevets**

(11) **EP 1 380 415 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
*B32B 27/36* (2006.01)       *B29C 55/14* (2006.01)
*C08J 5/18* (2006.01)       *C08K 3/36* (2006.01)
*B32B 15/08* (2006.01)

(21) Anmeldenummer: **03014482.8**

(22) Anmeldetag: **02.07.2003**

(54) **Mehrschichtige, metallisierte oder keramisch beschichtete, siegelfähige, biaxial orientierte Polyesterfolie, Verfahren zu ihrer Herstellung und ihre Verwendung**

Multilayered, metallised or ceramic-coated, sealable, biaxially oriented polyester film, process for its manufacture and its use

Film en polyester multicouche, métallisé ou recouvert de céramique, scellable et orienté biaxiallement ainsi que son procédé de fabrication et son utilisation

(84) Benannte Vertragsstaaten:
**DE FR GB IT LU**

(30) Priorität: **12.07.2002 DE 10231594**

(43) Veröffentlichungstag der Anmeldung:
**14.01.2004 Patentblatt 2004/03**

(73) Patentinhaber: **Mitsubishi Polyester Film GmbH 65203 Wiesbaden (DE)**

(72) Erfinder:
• **Janssens, Bart, Dr. 65187 Wiesbaden (DE)**

• **Peiffer, Herbert, Dr.Professor 55126 Mainz (DE)**
• **Bartsch, Stefan, Dr. 65199 Wiesbaden (DE)**

(74) Vertreter: **Schweitzer, Klaus et al Zounek Plate Schweitzer Patentanwaltskanzlei Rheingaustrasse 196 65203 Wiesbaden (DE)**

(56) Entgegenhaltungen:
**EP-A- 1 197 326       EP-A- 1 197 327
DE-A- 10 007 724**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine metallisierte oder keramisch beschichtete, siegelfähige, koextrudierte, biaxial orientierte Polyesterfolie bestehend aus mindestens einer Basisschicht (B) und beidseitig auf dieser Basisschicht aufgebrachten Deckschichten (A) und (C). Die Deckschicht (A) ist siegelfähig, die Deckschicht (C) ist metallisiert oder keramisch beschichtet. Die beiden Deckenschichten (A) und (C) der Folie sind durch bestimmte, erfinderische Merkmale charakterisiert. Die Erfindung betrifft weiterhin ein Verfahren zur Herstellung der metallisierten oder keramisch beschichteten Folie und ihre Verwendung.

Siegelfähige, biaxial orientierte Polyesterfolien sind bekannt. Diese bekannten Folien zeichnen sich entweder durch ein gutes Siegelverhalten oder durch eine gute Optik oder durch ein akzeptables Verarbeitungsverhalten aus.

In der **GB-A 1 465 973** wird eine koextrudierte, zweischichtige Polyesterfolie beschrieben, deren eine Schicht aus isophthalsäurehaltigen und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nicht prozesssicher herstellbar (die Folie ist nicht wickelbar) und nur unter großen Einschränkungen weiterverarbeitbar. Die Folie kann auf keinem Fall auf solchen Anlagen weiterverarbeitet werden, die mit Hilfe eines Vakuums arbeiten (Metallisierung, Beschichtung mit keramischen Materialien, etc.). Für eine Metallisierung oder für das Aufbringen einer keramischen Beschichtung ist sie gänzlich ungeeignet.

In der **EP-A-0 035 835** wird eine koextrudierte, siegelfähige Polyesterfolie beschrieben, der zur Verbesserung des Wickel- und des Verarbeitungsverhaltens in der Siegelschicht Partikel zugesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Über die andere, nicht siegelfähige Schicht der Folie, werden keine näheren Angaben zur Einarbeitung von Antiblockmitteln gemacht. Enthält diese Schicht keine Antiblockmittel, so ist die Folie nur bedingt weiterverarbeitbar, vor allem kann sie dann nur mit Einschränkung im Vakuum beschichtet werden. Durch die bevorzugte Verwendung von bimodalen Partikelsystemen wird die Verteilung des Partikeldurchmessers sehr breit. Hierdurch und durch die in den Beispielen der Schrift angegebenen Konzentrationen wird das Siegelverhalten der Folie verschlechtert. Angaben zum Siegeltemperaturbereich, insbesondere zur Siegelanspringtemperatur (= Mindestsiegeltemperatur (MST)) der Folie, werden in der Schrift nicht gemacht. Die Siegelnahtfestigkeit wird bei 140 °C gemessen und liegt in einem Bereich von 85 bis 120 N/m (entsprechend 1,275 bis 1,8 N/15 mm Folienbreite). Des Weiteren weist die Folie verbesserungswürdige optische Eigenschaften auf. Die Trübung der Folie liegt in einem Bereich von 5 bis 15 %, was für die meisten Anwendungen deutlich zu hoch ist.

Die EP-0 379 190 offenbart eine koextrudierte Polyesterfolie, die eine siegelfähige Schicht mit einer Siegelenergie aufweist, die größer als 400 g · cm/15 mm ist. Die Siegelschicht enthält anorganische oder auch zusätzlich organische Partikel, die in einer Konzentration von 0,01 bis 5 % der Siegelschicht zu gegeben werden. Der Durchmesser dieser Partikel ist kleiner als die Dicke der Siegelschicht, über die absolute Größe der Partikel finden sich keine definitive Angaben. In den Beispielen variiert der Durchmesser zwischen 2 und 3,5 μm. In der bevorzugten Ausführungsform sind die Partikel monodispers und nahezu kugelförmig. Die Basisschicht kann ebenfalls solche partikelförmige Additive enthalten. Aus dieser Schrift sind jedoch keine Lehren zu ziehen, wie z. B. die Basis zu pigmentieren ist, damit die siegelfähigen Folie auf Anlagen, die unter Vakuum stehen, verfahrenssicher zu verarbeiten sind. Die Folie kann daher z.B. nicht oder nur mit großer Einschränkung im Vakuum beschichtet werden.

In der **EP-A-0 432 886** wird eine koextrudierte mehrschichtige Polyesterfolie beschrieben, die eine erste Oberfläche besitzt, auf der eine siegelfähige Schicht angeordnet ist, und eine zweite Oberfläche, auf der eine Acrylatschicht angeordnet ist. Die siegelfähige Deckschicht kann auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 um dicke Siegelschicht wird eine Siegelnahtfestigkeit von 761,5 N/m (entsprechend 11,4 N/15 mm Folienbreite) angegeben. Nachteilig an der rückseitigen Acrylatbeschichtung ist, dass diese Seite nur eine niedrige Metallhaftung aufweist und daher für eine Metallisierung weniger gut geeignet ist. Außerdem siegelt dies Seite nicht gegen die siegelfähige Deckschicht, was bei einer Streifenmetallisierung jedoch von Vorteil wäre. Der Anwendungsbereich der Folie ist damit eingeschränkt.

In der **EP-A-0 515 096** wird eine koextrudierte, mehrschichtige, siegelfähige Polyesterfolie beschrieben, die auf der siegelfähigen Schicht ein zusätzliches Additiv enthält und sich durch eine entsprechende Topographie auszeichnet (Anzahl der Erhebungen und Bereich für die mittlere Höhe der Erhebungen). Das Additiv kann z. B. anorganische Partikel enthalten und wird vorzugsweise in einer wässrigen Schicht auf die Folie bei deren Herstellung angetragen. Daneben kann das Additiv (= Antiblockmittel) aber auch direkt in die Siegelschicht eingearbeitet werden. Hierdurch soll die Folie die guten Siegeleigenschaften beibehalten und gut zu verarbeiten sein. Die Rückseite der Folie enthält vorzugsweise nur sehr wenige, vergleichsweise kleine Partikel, die hauptsächlich über das Eigenregranulat in diese Schicht gelangen. Angaben zum Siegeltemperaturbereich der Folie werden in dieser Schrift nicht gemacht. Die Siegelnahtfestigkeit wird bei 140 °C gemessen und beträgt mehr als 200 N/m (entsprechend 3 N/15 mm Folienbreite). Für eine 3 $\mu$m dicke Siegelschicht wird eine Siegelnahtfestigkeit von 275 N/m (entsprechend 4,125 N/15 mm Folienbreite) angegeben. Die Folie ist nur bedingt für die Weiterverarbeitung auf Anlagen geeignet, die im Vakuum arbeiten (Physical vapor deposition (PVD)-Verfahren wie Metallisierung und Beschichtung mit keramischen Substanzen). Gründe hierfür sind die niedrige Rauhigkeit der heißsiegelfähigen Schicht, die niedrige mittlere Höhe der Erhebungen der in dieser Schicht enthaltenden Teilchen und die Ausrüstung der anderen, nicht siegelfähige Schicht der Folie mit Antiblockmitteln in nur geringer Konzentration (z. B. über das Regenerat). Außerdem ist die Folie in den optischen Eigenschaften verbesserungswürdig. Die Trübung der Folie ist größer als 3 %, was für viele Anwendungen zu hoch ist.

In der **WO 98/06575** wird eine koextrudierte, mehrschichtige Polyesterfolie beschrieben, die eine siegelfähige Deckschicht und eine nicht siegelfähige Basisschicht enthält. Die Basisschicht kann dabei aus einer oder aus mehreren Schichten aufgebaut sein, wobei eine der Schichten mit der siegelfähigen Schicht in Kontakt ist. Die andere (äußere) Schicht bildet dann die zweite, nicht siegelfähige Deckschicht. Die siegelfähige Deckschicht kann auch hier aus isophthalsäurehaltigen und terephthalsäurehaltigen Copolyestern bestehen, die jedoch keine Antiblockteilchen enthalten. Die Folie enthält außerdem noch mindestens einen UV-Absorber, der der Basisschicht in einer Menge von 0,1 bis 10 Gew.-% zugegeben wird. Die Basisschicht dieser Folie ist mit üblichen Antiblockmitteln ausgestattet. Die Folie zeichnet sich durch eine gute Siegelfähigkeit aus, ist jedoch für eine Metallisierung weniger gut geeignet. Daneben weist sie Defizite in den optischen Eigenschaften (Glanz und Trübung) auf.

In der **EP-A 1 138 480** wird eine koextrudierte, biaxial orientierte, siegelfähige Polyesterfolie mit mindestens einer Basisschicht (B), einer siegelfähigen Deckschicht (A) und einer weiteren Deckschicht (C) beschrieben. Die siegelfähige Deckschicht (A) weist eine Siegelanspringtemperatur von maximal 110 °C und eine Siegelnahtfestigkeit von mindestens 1,3 N/15 mm Folienbreite auf und ist des weiteren durch entsprechende Merkmale hinsichtlich der Topographie der beiden Deckschichten (A) und (C) gekennzeichnet. Die relativ glatte, vergleichsweise nur relativ wenige Antiblockteilchen enthaltende Siegelschicht zeichnet sich durch hervorragende Siegeleigenschaften, durch eine gute Herstellbarkeit, sowie durch eine gute Verarbeitbarkeit (Bedrucken, Schneiden, Laminieren, etc.) aus. Für die Verarbeitung auf Anlagen, bei denen im Vakuum gearbeitet wird, kann sie nicht oder aber nur mit großer Einschränkung verwendet werden.

Aufgabe der vorliegenden Erfindung war es daher, eine metallisierte oder keramisch beschichtete, koextrudierte, siegelfähige, biaxial orientierte Polyesterfolie bereitzustellen, die die Nachteile der genannten Folien nach dem Stand der Technik nicht aufweist und sich vor allem durch eine sehr gute Verarbeitbarkeit auf Anlagen, bei denen im Vakuum gearbeitet wird (Metallisierung, Beschichtung mit keramischen Substanzen, generell die Anwendung von PVD- und Chemical vapor deposition (CVD)-Verfahren) und sich durch sehr gute optische Eigenschaften auszeichnet. So soll die Folie z. B. beim Beschichten mit keramischen Substanzen (z.B. $SiO_x$, $Al_2O_3$) im Vakuum nicht verblocken und sie soll sich dort gut wickeln lassen. Dies gilt sowohl für die Abwicklung der Folie vor der Beschichtung, als auch für die Aufwicklung der Folie nach der Beschichtung. Durch ein Verblocken der beiden Folienoberflächen nach der Beschichtung kann sich die (siegelfähige) Folienrückseite mit der beschichteten (nicht siegelfähigen) Seite "verkleben", was unerwünscht ist. Beim Umwickeln der verblockten Rolle (die Verblockungen liegen in der Regel partiell auf den Folienoberflächen vor und sind meist statistisch verteilt) kann das Material von der Folienoberfläche regelrecht abgerissen und auf die andere, siegelfähige Folienoberfläche übertragen werden, was ebenfalls unerwünscht ist. Außerdem kann das Verblocken der beiden Folienoberflächen bei den nachfolgenden Verarbeitungsschritten zu Abrissen der Folienbahn führen. Die Folie soll daneben eine gute Siegelfähigkeit aufweisen, wobei die Siegelschicht (A) gegen sich selbst (engl.: "fin"-Siegelung), aber auch gegen die Rückseite (nicht siegelfähige Seite (C)) (engl.: "lap"-Siegelung) siegeln soll. Dies ist wichtig bei der sogenannten Streifenmetallisierung oder bei der partiellen Metallisierung der Folie (hierbei wird z. B. nach der Metallisierung die Folie partiell entmetallisiert, wozu spezielle Verfahren angewendet werden). Bei der Herstellung der Folie soll weiterhin gewährleistet sein, dass bei der Folienherstellung anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden. Zusammengefasst waren es insbesondere die folgenden Eigenschaften, die gegenüber (metallisierten oder keramisch beschichteten) Folien nach dem Stand der Technik verbessert werden sollten:

-    die Eigenschaften, die für eine gute Verarbeitung der Folie im Vakuum und den nachfolgenden Verarbeitungsschritten notwendig sind

-    die Wickelung, insbesondere bei der Verarbeitung der Folie im Vakuum und bei der Weiterverarbeitung in nachfolgenden Prozessschritten

-    das Blockverhalten der beiden Folienoberflächen, insbesondere nach der Metallisierung oder der keramischen Beschichtung

-    die optischen Eigenschaften der metallisierten oder keramisch beschichteten Folie, insbesondere der Glanz.

Die Aufgabe wird erfindungsgemäß durch die Bereitstellung einer metallisierten oder keramisch beschichteten, koextrudierten, biaxial orientierten, siegelfähigen Polyesterfolie mit mindestens einer Basisschicht (B), einer siegelfähigen Deckschicht (A) und einer metallisierten oder keramisch beschichteten Deckschicht (C) gelöst, wobei die siegelfähige Deckschicht (A) eine Siegelanspringtemperatur (fin) von nicht mehr als 110 °C und eine Siegelnahtfestigkeit (fin) von mindestens 1,3 N/15 mm Folienbreite aufweist und die beiden Deckschichten (A) und (C) durch die folgenden Merkmale gekennzeichnet sind:

Die siegelfähige Deckschicht (A):

a) enthält Partikel aus synthetischem $SiO_2$ mit einem mittleren Partikeldurchmesser $d_{50}$ von 2,5 bis 10 $\mu$m,
b) enthält Partikel, deren Durchmesser eine SPAN98 aufweisen, die kleiner/gleich 1,80 ist,
c) enthält Partikel in einer Konzentration von 500 bis 5000 ppm,
d) weist eine Rauhigkeit $R_a$ von größer als 60 nm auf,
e) weist einen Reibungskoeffizienten A-Seite gegen A-Seite auf, der kleiner als 0,8 ist.

Die nicht siegelfähige, metallisierte Deckschicht (C):

f) enthält Partikel im wesentlichen aus synthetischem $SiO_2$ mit einem mittleren Partikeldurchmesser $d_{50}$ von 1,5 bis 6 $\mu$m,
g) enthält Partikel, deren Durchmesser eine SPAN98 aufweisen, die kleiner/gleich 2,0 ist,
h) enthält Partikel in einer Konzentration von 1000 bis 5000 ppm,
i) weist eine Rauhigkeit $R_a$ auf, die zwischen $30 \leq R_a \leq 150$ nm liegt,
j) weist einen Reibungskoeffizienten C-Seite gegen C-Seite auf, der kleiner als 0,8 ist.

Erfindungsgemäß ist die Folie zumindest dreischichtig und umfasst dann als Schichten die Basisschicht (B), die siegelfähige Deckschicht (A) und die nicht siegelfähige, metallisierte oder keramisch beschichtete Deckschicht (C).

Die Basisschicht (B) der Folie besteht bevorzugt zu mindestens 80 Gew.-% aus einem thermoplastischen.Polyester. Dafür geeignet sind Polyester aus Ethylenglykol und Terephthalsäure (= Polyethylenterephthalat, PET), aus Ethylenglykol und Naphthalins dicarbonsäure (= Polyethylen-2,6-naphthalat, PEN), aus 1,4-Bis-hydroximethyl-cyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Des Weiteren bevorzugt sind Mischungen (Blends) aus den vorgenannten Rohstoffen, insbesondere Blends, die Polyethylenterephthalat und Pölyethylen-2,6-naphthalat enthalten. Hierunter sind ganz besonders wiederum solche Blends bevorzugt, die die oben genannten Rohstoffe enthalten und teilkristallinen Charakter aufweisen. Die restlichen Monomereinheiten stammen aus anderen aliphatischen, cycloaliphatischen oder aromatischen Diolen bzw. Dicarbonsäuren, wie sie auch in der Schicht (A) oder in der Schicht (C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x' dicarbonsäuren, insbesondere Diphenylacetylen-4,4'-dicarbonsäure, oder Stilben-x,x' dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die durch Koextrusion auf die Basisschicht (B) aufgebrachte siegelfähige Deckschicht (A) ist auf Basis von Polyestercopolymeren aufgebaut und besteht im Wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 85 Mol-% und der entsprechende Anteil an Ethylenisophthalat 50 bis 15 Mol-% beträgt, und ganz bevorzugt sind Copolyester, bei denen der Anteil an Ethylenterephthalat 60 bis 80 Mol-% und der entsprechende Anteil an Ethylenisophthalat 40 bis 20 Mol-% beträgt.

Für die andere, nicht siegelfähige, metallisierte oder keramisch beschichtete Deckschicht (C) oder für eventuell vorhandene Zwischenschichten werden prinzipiell die gleichen Polymere verwendet, wie sie zuvor für die Basisschicht (B) beschrieben wurden.

Die gewünschten Siegel- und die gewünschten Verarbeitungseigenschaften, insbesondere das gewünschte Verhalten der erfindungsgemäßen Folie bei der Beschichtung im Vakuum, werden aus der Kombination der Eigenschaften der verwendeten Copolyester für die siegelfähige Deckschicht und den Topographien der siegelfähigen Deckschicht (A) und der nicht siegelfähigen, metallisierten oder keramisch beschichteten Deckschicht (C) erhalten.

Die Siegelanspringtemperatur (fin) von 110 °C und die Siegelnahtfestigkeit (fin) von mindestens 1,3 N/15 mm Folienbreite werden beispielsweise erreicht, wenn für die siegelfähige Deckschicht (A) die oben näher beschriebenen Copolymeren verwendet werden. Die besten Siegeleigenschaften der Folie ergeben sich, wenn dem Copolymeren keine weiteren Additive, insbesondere keine anorganischen oder organischen Partikel, zugegeben werden. Allerdings ist in diesem Fall das Handling der Folie schlecht, da die Oberfläche der siegelfähigen Deckschicht (A) stark zum Verblocken neigt. Die Folie lässt sich nicht gut wickeln und ist für eine Weiterverarbeitung auf schnelllaufenden Verpackungsmaschinen wenig geeignet. Überhaupt nicht geeignet ist eine solche Folie für die Verarbeitung auf Anlagen, die mit Hilfe eines angelegten Vakuums arbeiten. Auf Grund des vorherrschenden Vakuums neigt die Folie besonders stark zum Verblocken. Die einzelnen Folienlagen werden durch das Vakuum (kleiner als $10^{-2}$ Torr) aufeinander gepresst und "verkleben" sofort, wenn sie nicht ausreichend pigmentiert sind.

Zur Verbesserung des Handlings der Folie und der Verarbeitbarkeit der Folie auf Anlagen, die ein Vakuum nutzen, ist es notwendig, die siegelfähige Deckschicht (A) zu modifizieren. Dies geschieht am besten mit Hilfe von geeigneten Antiblockmitteln einer ausgewählten Größe, die der Siegelschicht in einer bestimmten Menge zugegeben werden und zwar derart, dass einerseits das Verblocken der Folie minimiert und andererseits die Siegeleigenschaften nicht wesentlich verschlechtert werden. Die gewünschten Eigenschaften der Folie hinsichtlich Siegelbarkeit und Verarbeitbarkeit im Vakuum lassen sich erreichen, wenn die siegelfähige Deckschicht (A) durch den folgenden Satz von Parametern gekennzeichnet ist:

a) Erfindungsgemäß enthält die siegelfähige Deckschicht (A) Partikel (= Antiblockmittel) aus synthetischem $SiO_2$ mit einem mittleren Partikeldurchmesser $d_{50}$ von 2,5 bis 10 $\mu$m.

Typische bekannte Antiblockmittel (auch als "Pigmente" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel. Die Partikel können den einzelnen Schichten in den jeweils vorteilhaften Konzentrationen, z.B. als glykolische Dispersion während der Polykondensation oder über Masterbatche bei der Extrusion zugegeben werden.

Diese genannten Antiblockmittel (bis auf die amorphe Kieselsäure) sind jedoch gemäß der vorliegenden Erfindung nicht bevorzugt. Ebenso wenig bevorzugt sind Partikel mit kugelförmiger Gestalt. Bei der Verarbeitung der Folie, welches gleichbedeutend ist mit einer hohen mechanischen Belastung der Folie, neigen solche (kugelförmige) Partikel dazu, aus der Folie herauszufallen (sie kreiden aus), was unerwünscht ist.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikel bei der biaxialen Orientierung, verursachen im Allgemeinen Trübung und sind daher für die vorliegende Erfindung wenig geeignet. Zur (synthetischen) Herstellung der $SiO_2$-Partikel (auch Silicagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann es getrocknet und weiterverarbeitet werden. Durch Kontrolle des Waschwasser-pH-Wertes und der Trocknungsbedingungen können die wichtigen physikalischen Parameter, wie z.B. Porenvolumen, Porengröße und die Größe der Oberfläche des anfallenden Silikagels variiert werden. Die gewünschte Partikelgröße (z. B. der $d_{50}$-Wert) und die gewünschte Partikelgrößenverteilung (z. B. ausgedrückt durch das Streumaß SPAN98) erhält man durch geeignete Mahlung des Silikagels (z. B. mechanisch oder hydromechanisch). Hersteller solcher Partikel sind z. B. die Firmen Grace, Fuji, Degussa oder Crosfield.

Es hat sich als besonders vorteilhaft erwiesen, Teilchen mit einem mittleren Partikeldurchmesser $d_{50}$ von 2,5 bis 10 $\mu$m, bevorzugt von 2,8 bis 8 $\mu$m und besonders bevorzugt von 3,1 bis 6 $\mu$m zu verwenden. Bei der Verwendung von Teilchen mit einem Durchmesser, der unterhalb 2,5 $\mu$m liegt, stellt sich (bei vergleichbaren Konzentrationen) eine erhöhte Trübung ein und die Blockneigung der Folie wird größer. Teilchen mit einem Durchmesser größer als 10 $\mu$m verursachen in der Regel Filterprobleme.

b) Erfindungsgemäß enthält die siegelfähige Deckschicht (A) Partikel, deren Durchmesser eine Streuung aufweist, die durch eine SPAN98 $\leq$ 1,8 beschrieben wird (Definition der SPAN98, siehe Messvorschrift). Bevorzugt ist eine SPAN98 $\leq$ 1,7 und besonders bevorzugt ist eine SPAN98 $\leq$ 1,6. Enthält die Deckschicht (A) der Folie dagegen ein Partikelsystem, bei dem die SPAN98 des Durchmessers größer als 1,8 ist, so werden die optischen Eigenschaften und die Siegeleigenschaften der Folie schlechter.

c) Erfindungsgemäß enthält die siegelfähige Deckschicht (A) Partikel in einer Konzentration von 500 bis 5000 ppm. Bevorzugt beträgt die Konzentration der Partikel 800 bis 4000 ppm und besonders bevorzugt 1000 bis 3000 ppm. Enthält die Deckschicht (A) der Folie dagegen ein Partikelsystem, bei dem die Partikel in einer Konzentration von weniger als 500 ppm vorliegen, so ist sie insbesondere für eine Verarbeitung im Vakuum weniger geeignet. Enthält dagegen die Deckschicht (A) der Folie ein Partikelsystem, bei dem die Partikel in einer Konzentration von mehr als 5000 ppm vorliegen, so wird die Trübung der Folie zu groß.

d) Erfindungsgemäß ist die Rauigkeit der siegelfähigen Deckschicht, ausgedrückt durch den $R_a$-Wert, größer als 60 nm. Bevorzugt ist die Rauhigkeit $R_a$ größer als 80 nm und besonders bevorzugt größer als 100 nm. Im anderen Fall ist die Folie für eine Verarbeitung im Vakuum weniger geeignet.

e) Erfindungsgemäß hat die siegelfähigen Deckschicht (A) einen Reibungskoeffizienten A-Seite gegen A-Seite, der kleiner als 0,8 ist. Bevorzugt ist ein Reibungskoeffizienten kleiner als 0,75 und besonders bevorzugt ist ein Reibungskoeffizient kleiner als 0,7. Im anderen Fall ist die Folie für die Verarbeitung im Vakuum weniger geeignet.

Um das Verarbeitungsverhalten, insbesondere die Verarbeitung der siegelfähigen Folie im Vakuum weiterhin zu verbessern, sollte die nicht siegelfähige, metallisierte oder keramisch beschichtete Deckschicht (C) durch den folgenden Satz von Parametern gekennzeichnet sein:

a) Erfindungsgemäß enthält die nicht siegelfähige, metallisierte oder keramisch beschichtete Deckschicht (C) Partikel aus synthetisch hergestelltem, amorphem $SiO_2$ mit einem mittleren Partikeldurchmesser $d_{50}$ (= Median) von 1,5 bis 6 $\mu$m. Für die Lösung der Aufgabe hat es sich als besonders zweckmäßig erwiesen, Teilchen mit einem mittleren Partikeldurchmesser $d_{50}$ von bevorzugt von 2,0 bis 5 $\mu$m und besonders bevorzugt von 2,5 bis 4 $\mu$m zu verwenden.

b) Erfindungsgemäß enthält die nicht siegelfähige, metallisierte oder keramisch beschichtete Deckschicht (C) Partikel, deren Durchmesser eine Streuung aufweist, die durch eine SPAN98 $\leq$ 2,0 beschrieben wird. Bevorzugt ist eine SPAN98 $\leq$ 1,9 und besonders bevorzugt ist eine SPAN98 $\leq$ 1,8. Enthält die Deckschicht (C) der Folie dagegen ein Partikelsystem, bei dem die SPAN98 des Durchmessers größer als 2,0 ist, so werden die optischen Eigenschaften der metallisierten oder keramisch beschichteten Folie schlechter.

c) Erfindungsgemäß enthält die nicht siegelfähige, metallisierte oder keramisch beschichtete Deckschicht (C) Partikel in einer Konzentration von 1000 bis 5000 ppm. Bevorzugt beträgt die Konzentration der Partikel 1200 bis 4000 ppm und besonders bevorzugt 1500 bis 3000 ppm. Enthält die Deckschicht (C) der Folie dagegen ein Partikelsystem, bei dem die Partikel in einer Konzentration von weniger als 1000 ppm vorliegen, so ist sie für die Verarbeitung im Vakuum nicht so gut geeignet. Enthält dagegen die Deckschicht (C) der Folie ein Partikelsystem, bei dem die Partikel in einer Konzentration von mehr als 5000 ppm vorliegen, so wird der Glanz der Folie zu klein.

d) Erfindungsgemäß beträgt die Rauhigkeit der nicht siegelfähigen, metallisierten oder keramisch beschichteten Deckschicht, ausgedrückt durch den $R_a$-Wert, $30 \leq R_a \leq 150$ nm. Bevorzugt liegt Rauhigkeit $R_a$ zwischen $35 \leq R_a \leq 130$ nm und besonders bevorzugt zwischen $40 \leq R_a \leq 110$ nm. Anderenfalls ist diese Oberfläche für die Verarbeitung im Vakuum weniger geeignet.

e) Erfindungsgemäß hat die nicht siegelfähige, metallisierte oder keramisch beschichtete Deckschicht (C) einen Reibungskoeffizienten C-Seite /C-Seite, der kleiner als 0,8 ist. Bevorzugt ist ein Reibungskoeffizient kleiner als 0,7 und besonders bevorzugt ist ein Reibungskoeffizient kleiner als 0,6. Im anderen Fall ist die Folie für die Verarbeitung im Vakuum, bzw. für die Weiterverarbeitung weniger geeignet.

Zur Erzielung der vorgenannten Eigenschaften der siegelfähigen Folie hat es sich als zweckmäßig erwiesen, die Menge an Partikeln in der Basisschicht (B) niedriger einzustellen als in den beiden Deckschichten (A) und (C). Bei der dreischichtigen Folie vom genannten Typ soll zweckmäßiger Weise in der Basisschicht (B) die Menge der Partikel zwischen 0 und 0,15 Gew.-% liegen, vorzugsweise zwischen 0 und 0,12 Gew.-%, insbesondere zwischen 0 und 0,10 Gew.-%. Als besonders zweckmäßig hat es sich erwiesen, in die Basisschicht nur Partikel einzuarbeiten, wie sie über das arteigene Regenerat in die Folie gelangen. Die optischen Eigenschaften der Folie, insbesondere der Glanz der metallisierten oder keramisch beschichteten Folie, sind dann besonders gut.

In der vorteilhaften Verwendungsform besteht die Folie aus drei Schichten, der Basisschicht (B) und beidseitig auf dieser Basisschicht aufgebrachten Deckschichten (A) und (C), wobei die Deckschicht (A) gegen sich selbst (engl.: "fin"-Siegelung) und gegen die (nicht metallisierte bzw. nicht keramisch beschichtete) Deckschicht (C) siegelfähig (engl.: "lap"-Siegelung) ist. Die "lap"-Siegelung ist dabei im allgemeinen etwas schlechter als die "fin"-Siegelung. Die Siegelanspringtemperatur bei der "lap"-Siegelung sollte nicht größer als 120 °C sein und die Siegelnahtfestigkeit sollte mindestens 1,0 N/15 mm Folienbreite betragen. In den erfindungsgemäßen Folien ist dies der Fall.

Zwischen der Basisschicht und den Deckschichten kann sich gegebenenfalls noch eine Zwischenschicht befinden. Diese kann wiederum aus den für die Basisschichten beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im allgemeinen größer als 0,3 $\mu$m und liegt vorzugsweise im Bereich von 0,5 bis 15 $\mu$m, insbesondere im Bereich von 1,0 bis 10 $\mu$m, besonders bevorzugt im Bereich von 1,0 bis 5 $\mu$m.

Bei der besonders vorteilhaften dreischichtigen Ausführungsform der erfindungsgemäßen Folie ist die Dicke der Deckschichten (A) und (C) im allgemeinen größer als 0,5 $\mu$m und liegt vorzugsweise im Bereich von 0,55 bis 6,0 $\mu$m, besonders bevorzugt im Bereich von 0,6 bis 5 $\mu$m, insbesondere im Bereich von 0,65 bis 4 $\mu$m und ganz besonders bevorzugt im Bereich von 0,7 bis 3 $\mu$m, wobei die Deckschichten (A) und (C) gleich oder verschieden dick sein können.

Die Gesamtdicke der erfindungsgemäßen Polyesterfolie kann innerhalb bestimmter Grenzen variieren. Sie beträgt 3 bis 100 $\mu$m, insbesondere 4 bis 80 $\mu$m, vorzugsweise 5 bis 60 $\mu$m, wobei die Schicht (B) einen Anteil von vorzugsweise 45 bis 90 % an der Gesamtdicke hat.

Die Basisschicht und die anderen Schichten können zusätzlich übliche Additive, wie Stabilisatoren und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Die Erfindung betrifft auch ein Verfahren zur Herstellung der erfindungsgemäßen Polyesterfolie nach dem an sich aus der Literatur bekannten Koextrusionsverfahren.

Die Polymere für die Basisschicht (B) und die beiden Deckschichten (A) und (C) werden zur Herstellung der Folie drei getrennten Extrudern zugeführt. Etwa vorhandene Fremdkörper oder Verunreinigungen lassen sich aus der Polymerschmelze vor der Extrusion durch geeignete Filter entfernen.

Die den einzelnen Schichten (A), (B) und (C) der Folie entsprechenden Schmelzen werden durch eine Flachdüse koextrudiert, die so erhaltene Folie wird zur Verfestigung auf einer oder mehreren Walze/n abgezogen, die Folie anschließend biaxial gestreckt (orientiert), die biaxial gestreckte Folie thermofixiert und gegebenenfalls an der zur Behandlung vorgesehenen Oberflächenschicht corona- oder flammbehandelt.

Zunächst wird, wie beim Koextrusionsverfahren üblich, das Polymere bzw. die Polymermischungen für die einzelnen Schichten in dem jeweiligen Extrudern komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Verstreckung wird im allgemeinen sequentiell durchgeführt. Dabei wird die Vorfolie vorzugsweise zuerst in Längsrichtung (d. h. in Maschinenrichtung, = MD-Richtung) und anschließend in Querrichtung (d. h. senkrecht zur Maschinenrichtung, = TD-Richtung) gestreckt. Dies führt zu einer räumlichen Ausrichtung (Orientierung) der Polymerketten. Das Strecken in Längsrichtung lässt sich z. B. mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche (n) der Folie nach den bekannten Verfahren in-line beschichten. Die In-line-Beschichtung kann beispielsweise zu einer verbesserten Haftung der Metallschicht, der keramischen Beschichtung (in diesem Fall wird die Deckschicht C beschichtet) oder einer eventuell später aufzubringenden Druckfarbe, aber auch zur Verbesserung des antistatischen Verhaltens oder des Verarbeitungsverhaltens dienen (in diesem Fall kann alternativ auch die siegelfähige Deckschicht A beschichtet werden).

In einer bevorzugten Ausführungsform der erfindungsgemäßen Folie wird diese in-line auf der zu metallisierenden bzw. der keramisch zu beschichteten Seite C mit einer wässrigen Dispersion beschichtet, wie sie in der EP-A-0 144 978 beschrieben wird. Die Polyesterbeschichtung besteht aus einem Kondensationsprodukt von verschiedenen zur Bildung von Polyestern befähigten Derivaten, wie Isophthalsäure, aliphatische Dicarbonsäure, Sulfomonomeren und aliphatischen oder cycloaliphatischen Glykols. Die Folie weist dann eine sehr gute Haftung zu Metallen oder keramischen Beschichtungen auf, was für die vorliegende Anwendung besonders vorteilhaft ist.

Bei der nachfolgenden Thermofixierung wird die Folie über eine Zeitdauer von etwa 0,1 bis 10 s bei einer Temperatur von 150 bis 250°C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlüngsintensität liegt im allgemeinen im Bereich von über 50 mN/m.

Das Aufbringen der Metallschicht bzw. der keramischen Schicht erfolgt zweckmäßig auf allgemein üblichen industriellen Anlagen. Metallschichten aus Aluminium werden üblicherweise durch Bedampfen hergestellt, während keramische Schichten daneben auch mit Elektronenstrahlverfahren oder durch Aufsputtern erzeugt werden können. Die Verfahrensparameter der Anlage beim Aufbringen der Metallschicht bzw. der keramischen Schicht auf die Folien entsprechen den Standardbedingungen. Die Metallisierung der Folien wird vorzugsweise so durchgeführt, dass die optische Dichte der metallisierten Folien im Bereich von ca. 0,3 bis 3,4 liegen. Das Aufbringen der keramischen Schicht auf die Folie wird so durchgeführt, dass die Schichtstärke der Oxidschicht vorzugsweise im Bereich von 30 bis 200 nm liegt. Die Bahngeschwindigkeit der zu beschichtenden Folie liegt bei allen Einstellungen zwischen 2 und 10 m/s.

Die Metallschicht besteht bevorzugt aus Aluminium. Doch sind auch andere Materialien geeignet, die sich in Form einer dünnen, zusammenhängenden Schicht aufbringen lassen. Insbesondere ist z. B. Silizium geeignet, welches im Vergleich zu Aluminium eine transparente Schicht ergibt. Die keramische Schicht besteht bevorzugt aus Oxiden von Elementen der II., III. oder IV. Hauptgruppe des Periodensystems, insbesondere Oxiden des Magnesiums, Aluminiums oder Siliciums. Allgemein sind solche metallischen oder keramischen Materialien verwendet, die bei deutlich vermindertem Druck bzw. im Vakuum aufgebracht werden können. Die Dicke der aufgebrachten Schicht beträgt allgemein 10 bis 200 nm.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkend. Es bietet sich an, diese zusätzliche Schichten über In-line-Beschichtung mittels wässriger Dispersionen vor dem Streckschritt in Querrichtung auf die Folie aufzubringen.

Daneben bietet es sich in besonders vorteilhafter Weise an, die Folie auf der Deckschicht C direkt vor der Metallisierung oder der Beschichtung mit keramischen Materialien (in-line) plasmavorzubehandeln. Die Plasmavorbehandlung erfolgt dabei im selben Arbeitsgang wie die Metallisierung oder die Beschichtung mit keramischen Materialien; sie ist aber der eigentlichen Beschichtung vorgelagert. Als Reaktorgas kann z. B. Argon oder Sauerstoff oder aber ein Gemisch von beiden Stoffen verwendet werden. Durch die Plasmavorbehandlung wird ebenfalls eine bessere Haftung zu der aufgebrachten Beschichtung erzielt.

Die erfindungsgemäße Folie zeichnet sich durch eine hervorragende Siegelfähigkeit, ein sehr gutes Handling und durch ein sehr gutes Verarbeitungsverhalten, insbesondere bei der Verarbeitung im Vakuum, aus. Bei der Folie siegelt die siegelfähige Deckschicht (A) nicht nur gegen sich selbst (fin-Siegelung), sondern auch gegen die nicht siegelfähige Deckschicht (C) (lap-Siegelung).

Außerdem konnte die Trübung der (nicht metallisierten) Folie deutlich verbessert werden. Die Trübung der (nicht metallisierten) Folie nach der vorliegenden Erfindung beträgt weniger als 3,0 %, bevorzugt weniger als 2,7 % und besonders bevorzugt weniger als 2,5 %. Daneben ist bei der Herstellung der Folie gewährleistet, dass das Verschnittmaterial (Regenerat) in einer Menge im Bereich von 10 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere ihr optisches Erscheinungsbild.

Die Folie eignet sich demnach ganz hervorragend für den Einsatz in der flexiblen Verpackung und zwar insbesondere dort, wo ihre hervorragenden Siegeleigenschaften und ihre gute Verarbeitbarkeit voll zum Tragen kommt. Dies ist insbesondere ihr Einsatz bei der Beschichtung im Vakuum, bzw. bei den der Vakuumbeschichtung nachgeschalteten Prozessschritten

Die nachstehende Tabelle (Tabelle 1) fasst die wichtigsten erfindungsgemäßen Folieneigenschaften noch einmal auf einen Blick zusammen.

Tabelle 1

| | erfindungsgemäßer Bereich | bevorzugt | besonders bevorzugt | Einheit | Messmethode |
|---|---|---|---|---|---|
| **Deckschicht A** | | | | | |
| Siegelanspringtemperatur (fin-Siegelung) | < 110 | < 108 | < 105 | °C | intern |
| Siegelanspringtemperatur (lap-Siegelung) | < 120 | < 118 | < 115 | °C | intern |
| Siegelnahtfestigkeit (fin-Siegelung) | ≥ 1,3 3 | > 1,4 | > 1,5 | N/15mm | intern |
| Siegelnahtfestigkeit (lap-Siegelung) | ≥ 1,0 | ≥ 1,1 | > 1,2 | N/15mm | intern |
| Dicke der Deckschicht | > 0,5 | 0,55 bis 6 | 0,6 bis 5 | μm | |
| Partikeldurchmesser $d_{50}$ | 2,5 bis 10 | 2,8 bis 8 | 3,1 bis 6 | μm | intern |
| Streuung SPAN98 | ≤ 1,8 | ≤ 1,7 | ≤ 1,6 | - | intern |
| Füllstoffkonzentration | 500 bis 5000 | 800 bis 4000 | 1000 bis 3000 | ppm | intern |
| Mittlere Rauhigkeit $R_a$ | > 60 | > 80 | > 100 | nm | DIN 4768, Cut-off von 0,25 mm |
| COF A/A | < 0,8 | < 0,75 | < 0,7 | | DIN 53375 |
| Glanz, 20° | > 120 | > 130 | > 140 | | DIN 67530 |
| **Metallisierte Deckschicht C** | | | | | |
| Dicke der Deckschicht | > 0,5 | 0,55 bis 6 | 0,6 bis 5 | μm | |
| Partikeldurchmesser $d_{50}$ | 1,5 bis 6 | 2,0 bis 5 | 2,5 bis 4 | μm | intern |
| Streuung SPAN98 | ≤ 2,0 | ≤ 1,9 | ≤ 1,8 | - | intern |
| Füllstoffkonzentration | 1000 bis 5000 | 1200 bis 4000 | 1500 bis 3000 | ppm | intern |
| Mittlere Rauhigkeit $R_a$ | 30 bis 150 | 35 bis 130 | 40 bis 110 | nm | DIN 4768, Cut-off von 0,25 mm |
| COF C/C | < 0,8 | < 0,7 | < 0,6 | | DIN 53375 |
| Glanz, 20° | > 120 | > 130 | > 140 | | DIN 67530 |
| **weitere Folieneigenschaften** | | | | | |
| Trübung der nicht metallisierten Folie | < 3,0 | < 2,7 | < 2,5 | % | ASTM D1003-52 |

Zur Charakterisierung der Rohstoffe und der Folien wurden im Rahmen der vorliegenden Erfindung die folgenden Messmethoden benutzt:

**Optische Dichte**

Zur Messung der optischen Dichte wurde das Densitometer Macbeth TD-904 von Macbeth (Division of Kollmorgen Instruments Corp.) eingesetzt. Die optische Dichte ist definiert als $OD = - 1g\ I/I_0$, wobei I: die Intensität des eingestrahlten Lichtes, $I_0$: die Intensität des ausgestrahlten Lichtes und $I/I_0$: die Transmission bedeuten.

**Messung des mittleren Durchmessers d$_{50}$**

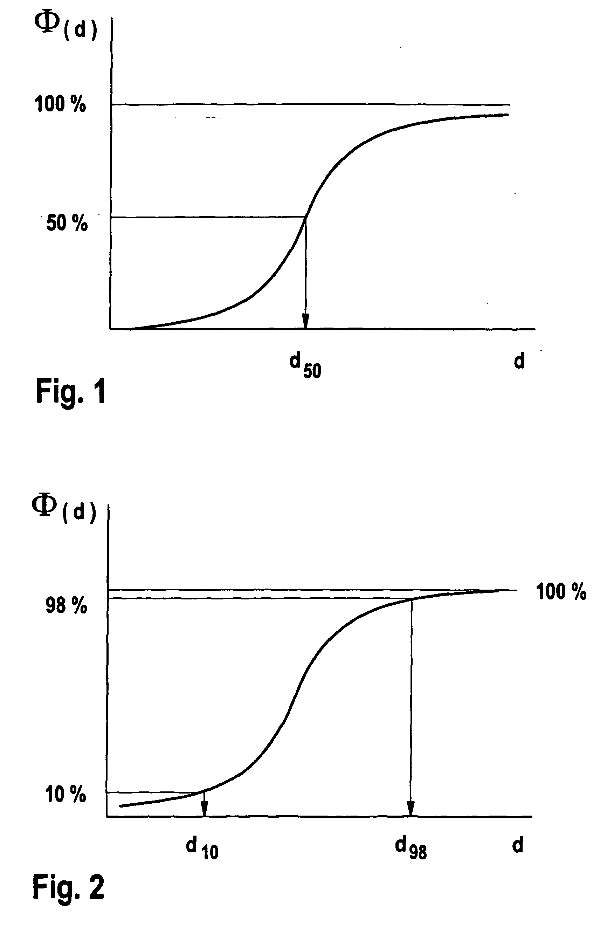

Die Bestimmung des mittleren Durchmessers d$_{50}$ wurde mittels Laser auf einem Malvern Mastersizer mittels Laserscannung durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert d$_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des d$_{50}$-Wertes: Der d$_{50}$ Wert wird dabei definitionsgemäß aus der (relativen) Summenkurve der Partikelgrößenverteilung bestimmt: Der Schnittpunkt des 50 % Ordinatenwertes mit.der Summenkurve liefert auf der Abszissenachse den gewünschten d$_{50}$-Wert (auch Median genannt, vgl. Figur 1).

**Messung der SPAN98**

Die Bestimmung des Streumaßes, der SPAN98, wurde mit dem gleichen Messgerät durchgeführt, wie oben bei der Bestimmung des mittleren Durchmessers d$_{50}$ beschrieben. Das Maß für die Streuung, die SPAN98 ist dabei wie folgt definiert:

$$SPAN98 = \frac{d_{98} - d_{10}}{d_{50}}.$$

Der Ermittlung von d$_{98}$ und d$_{10}$ wird wiederum die (relative) Summenkurve der Partikelgrößenverteilung zu Grunde gelegt. Der Schnittpunkt des 98 % Ordinatenwertes mit der Summenkurve liefert auf der Abszissenachse sofort den gewünschten d$_{98}$-Wert und der Schnittpunkt des 10 % Ordinatenwertes der Summenkurve mit der Kurve liefert auf der Abszissenachse den gewünschten d$_{10}$-Wert (vgl. Figur 2).

**SV-Wert (Standardviskosität)**

Die Standardviskosität SV (DCE) wird, angelehnt an DIN 53726, in Dichloressigsäure gemessen.

**Siegelnahtfestigkeit**

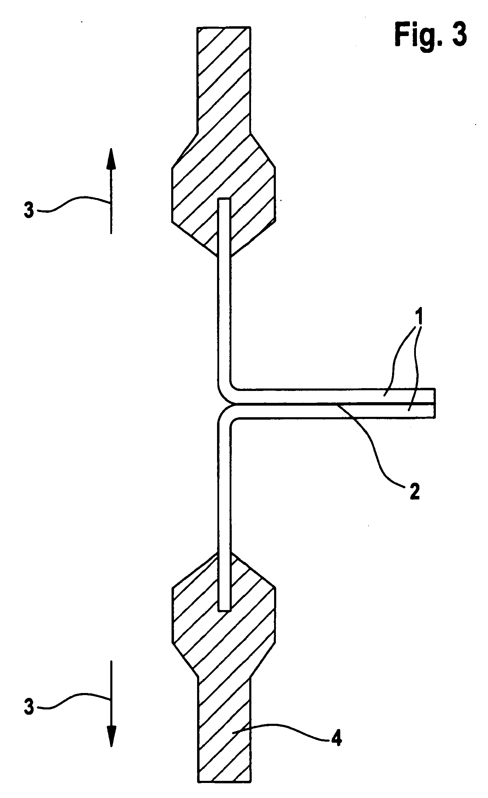

Zur Bestimmung der Siegelnahtfestigkeit werden zwei Folienblätter (1) (100 mm x 100 mm) übereinandergelegt und bei 130 °C, einer Siegelzeit von 0,5 s und einem Siegeldruck von 2 bar (Siegelgerät HSG/ET der Firma Brugger, beidseitig beheizte Siegelbacke, Siegelnaht (2) (10 mm x 100 mm) gesiegelt. Aus den gesiegelten Proben werden Prüfstreifen von 15 mm Breite geschnitten. Die Siegelnahtfestigkeit, d.h. die zur Trennung der Prüfstreifen benötigte Kraft (3), wird mit einer Zugprüfmaschine (z.B. Zwick) bei 200 mm/min Abzugsgeschwindigkeit bestimmt, wobei die Siegelnahtebene einen rechten Winkel mit der Zugrichtung bildet [vgl. Figur 3; mit Kluppe (4)]. Die Siegelnahtfestigkeit wird in N pro 15 mm Folienstreifen angegeben (z.B. 3 N/15 mm).

**Bestimmung der Siegelanspringtemperatur (Mindestsiegeltemperatur)**

Mit dem Siegelgerät HSG/ET der Firma Brugger werden wie zuvor bei der Messung der Siegelnahtfestigkeit beschrieben heißgesiegelte Proben (Siegelnaht 10 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die Siegelanspringtemperatur ist die Temperatur, bei der eine Siegelnahtfestigkeit von mindestens 0,5 N/15 mm erreicht wird. Die Siegelnahtfestigkeit wurde wie bei der Bestimmung der Siegelnahtfestigkeit gemessen.

**Rauigkeit**

Die Rauigkeit R$_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

**Reibungskoeffizient (COF)**

Die Reibung wurde nach DIN 53375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt

**Trübung**

Die Trübung nach Hölz wurde in Anlehnung an ASTM D1O03-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.
Im folgenden wird die Erfindung anhand von Beispielen näher erläutert.

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt. Ebenfalls wurden Chips aus Polyethylenterephthalat und Partikeln dem Extruder für die nicht siegelfähige Deckschicht (C) zugeführt.
Daneben wurden Chips aus einem linearen Polyester hergestellt, der aus einem amorphen Copolyester mit 78 Mol-% Ethylenterephthalat und 22 Mol-% Ethylenisophthalat besteht (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und dem Extruder für die siegelfähige Deckschicht (A) zugeführt.
Dann wurde durch Koextrusion und anschließende stufenweise Orientierung in Längs- und Querrichtung eine transparente, dreischichtige Folie mit ABC-Aufbau und einer Gesamtdicke von 12 $\mu$m hergestellt. Die Dicke der jeweiligen Deckschichten ist der Tabelle 2 zu entnehmen.
Deckschicht (A), Mischung aus:

96,0 Gew.-%     Copolyester mit einem SV-Wert von 800
4,0 Gew.-%     Masterbatch aus 95 Gew.-% Copolyester (SV-Wert von 800) und 5,0 Gew.-% ® Sylysia 430 (synthetisches $SiO_2$ der Fa. Fuji/Japan); SPAN98 =1,7

Basisschicht (B):

100,0 Gew.-%     Polyethylenterephthalat mit einem SV-Wert von 800

Deckschicht (C), Mischung aus:

85 Gew.-%     Polyethylenterephthalat mit einem SV-Wert von 800
15 Gew.-%     Masterbatch aus 99 Gew.-% Polyester (SV-Wert von 800) und 1,0 Gew.-% Sylobloc 44 H (synthetisches $SiO_2$ d Fa. Grace), SPAN98 = 1,9

Die Herstellungsbedingungen in den einzelnen Verfahrensschritten waren:

| Extrusion | Temperaturen | A-Schicht: | 270 | °C |
| | | B-Schicht: | 290 | °C |
| | | C-Schicht: | 290 | °C |
| | Temperatur der Abzugswalze | | 30 | °C |
| Längsstreckung | Aufheiztemperatur | | 80-125 | °C |
| | Strecktemperatur | | 122 | °C |
| | Längsstreckverhältnis | | 4,2 | |
| Querstreckung | Aufheiztemperatur | | 100 | °C |
| | Strecktemperatur | | 135 | °C |
| | Querstreckverhältnis | | 4,0 | |
| Fixierung | Temperatur | | 230 | °C |
| | Dauer | | 3 | s |

Die Folie hatte die geforderten guten Siegeleigenschaften, zeigte das gewünschte Handling und das gewünschte Verarbeitungsverhalten, insbesondere das Verarbeitungsverhalten bei Anlagen, die im Vakuum arbeiten. Die Folie wurde auf einer handelsüblichen Vakuumsbeschichtungsanlage (Top-Beam) der Fa. Applied/Hanau mit $SiO_x$ bei Standardparametern beschichtet. Die Schichtstärke der $SiO_x$-Schicht betrug 200 nm und die Beschichtungsgeschwindigkeit 300 m/min. Der Folienaufbau und die erzielten Eigenschaften derart hergestellter Folien sind in den Tabellen 2 und 3 dargestellt.

**Beispiel 2**

Im Vergleich zu Beispiel 1 wurde die Deckschichtdicke der siegelfähigen Schicht (A) von 1,5 auf 2,5 $\mu$m bei sonst identischem Folienaufbau und identischer Herstellungsweise angehoben.
Die Siegeleigenschaften haben sich hierdurch verbessert, insbesondere ist die Siegelnahtfestigkeit deutlich größer geworden. Die Folie hatte die geforderten Siegeleigenschaften, zeigte das gewünschte Handling und das gewünschte Verarbeitungsverhalten bei Anlagen, die im Vakuum arbeiten. Die Folie wurde wie in Beispiel 1 im Vakuum beschichtet.

**Beispiel 3**

Im Vergleich zu Beispiel I wurde jetzt eine 20 $\mu$m dicke Folie produziert. Die Deckschichtdicke der siegelfähigen Schicht (A) betrug 3,0 $\mu$m und diejenige der nicht siegelfähigen Schicht (C) betrug 2,0 $\mu$m. Die Siegeleigenschaften haben sich hierdurch nochmals verbessert, insbesondere ist die Siegelnahtfestigkeit deutlich größer geworden. Die Folie hatte die geforderten Siegeleigenschaften, zeigte das gewünschte Handling und das gewünschte Verarbeitungsverhalten bei Anlagen, die im Vakuum arbeiten. Die Folie wurde wie in Beispiel 1 im Vakuum beschichtet.

**Beispiel 4**

Im Vergleich zu Beispiel 3 wurde das Copolymere für die siegelfähige Deckschicht (A) geändert. Anstelle des amorphen Copolyesters mit 78 Mol-% Polyethylenterephthalat und 22 Mol-% Ethylenisophthalat wurde jetzt ein amorpher Copolyester mit 70 Mol-% Polyethylenterephthalat und 30 Mol-% Ethylenisophthalat verwendet. Die Deckschichtdicke der siegelfähigen Schicht (A) betrug wiederum 3 $\mu$m und diejenige der nicht siegelfähigen Schicht (C) betrug 2,0 $\mu$m. Die Siegeleigenschaften haben sich weiter verbessert, insbesondere ist die Siegelnahtfestigkeit deutlich größer geworden. Zur Erzielung eines guten Handlings und eines guten Verarbeitungsverhalten der Folie wurde die Partikelkonzentration in den beiden Deckschichten leicht angehoben. Die Folie wurde wie in Beispiel 1 im Vakuum beschichtet.

**Vergleichsbeispiel 1**

Im Vergleich zu Beispiel 1 wurde jetzt die siegelfähige Deckschicht (A) nicht pigmentiert (nicht mit Partikeln versehen). Die Siegeleigenschaften haben sich zwar hierdurch verbessert, jedoch ist das Handling der Folie und das Verarbeitungsverhalten inakzeptabel schlechter geworden. Die Folie wurde wie in Beispiel 1 im Vakuum beschichtet.

Hierbei kam es zu starken Verblockungen zwischen der beschichteten Seite (C) und der siegelfähigen Seite (A). Die Folie konnte wegen größerem Keramiktransfer (von der Deckschicht (C) zur Deckschicht (A)) nicht mehr weiterverarbeitet werden.

**Vergleichsbeispiel 2**

Es wurde Beispiel 1 aus der EP-A-0 035 835 nachgearbeitet. Das Siegelverhalten der Folie, das Handling der Folie und das Verarbeitungsverhalten der Folie sind schlechter als bei den erfindungsgemäßen Beispielen. Die Folie wurde wie in Beispiel 1 im Vakuum beschichtet. Außerdem war die Trübung der Folie schlecht.

**Vergleichsbeispiel 3**

Es wurde Beispiel 1 aus der EP-A-0 515 096 nachgearbeitet. Das Verarbeitungsverhalten der Folie im Vakuum ist schlechter als bei den erfindungsgemäßen Folien. Die Folie wurde wie in Beispiel 1 im Vakuum beschichtet. Außerdem war die Trübung der Folie nicht zufriedenstellend.

**Vergleichsbeispiel 4**

Es wurde Beispiel 21 aus der EP-A-0 379 190 nachgearbeitet. Das Verarbeitungsverhalten der Folie im Vakuum ist deutlich schlechter als bei den erfindungsgemäßen Beispielen. Die Folie wurde wie in Beispiel 1 im Vakuum beschichtet.

## Tabelle 2

| Bei-Spiel | Folien-dicke μm | Folien-aufbau | Schichtdicken μm | | | Partikel in den Schichten | | | mittlerer Partikel-Durchmesser in Schichten μm | | | Partikelkonzentrationen ppm | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 1,5 | Sylysia 430 | Kein | Sylobloc 44 H | 3,4 | | 2,5 | 2000 | 0 | 1500 |
| B 2 | 12 | ABC | 2,5 | 8,0 | 1,5 | Sylysia 430 | Kein | Sylobloc 44 H | 3,4 | | 2,5 | 2000 | 0 | 1500 |
| B 3 | 20 | ABC | 3,0 | 15,0 | 2,0 | Sylysia 430 | Kein | Sylobloc 44 H | 3,4 | | 2,5 | 2000 | 0 | 1500 |
| B 4 | 20 | ABC | 3,0 | 15,0 | 2,0 | Sylysia 430 | Kein | Sylobloc 44 H | 3,4 | | 2,5 | 2500 | 0 | 2000 |
| VB 1 | 12 | ABC | 1,5 | 9 | 1,5 | kein | Kein | Sylobloc 44 H | | | 2,5 | | 0 | 1500 |
| VB 2 | 15 | AB | 2,25 | 12,75 | | Gasil 35 | Kein | | 3 | | | 2500 | 0 | 0 |
| VB 3 | 15 | AB | 3,00 | 12,00 | | Aerosil K330 | Kein | | 0,04 | | | 8000 | 0 | 0 |
| VB 4 | 11,5 | AB | 2,50 | 9,00 | | Silica | Kein | | 2,0 | | | 5000 | 400 | 0 |

EP 1 380 415 B1

## Tabelle 3

| Bei-spiele | Siegelanspring-temperatur | | Siegelnaht-festigkeit | | Reibungskoeffizient COF | | Mittlere Rauhigkeit $R_a$ | | Trübung | Glanz | | Wickelverhalten und Handling | Verarbeitungs-verhalten |
|---|---|---|---|---|---|---|---|---|---|---|---|---|---|
| | °C | | N/15mm | | | | nm | | % | (20°) | | | |
| | fin | lap | fin | lap | A/A | C/C | A-Seite | C-Seite | | A-Seite | C-Seite | | |
| B 1 | 90 | 110 | 2,9 | 2,4 | 0,58 | 0,44 | 143 | 85 | 1,9 | 166 | 157 | ++ | ++ |
| B 2 | 90 | 108 | 4,2 | 2,7 | 0,65 | 0,44 | 123 | 85. | 2,1 | 160 | 180 | ++ | ++ |
| B 3 | 90 | 108 | 4,4 | 2,7 | 0,65 | 0,44 | 123 | 85 | 2,1 | 160 | 180 | ++ | ++ |
| B 4 | 90 | 105 | 4,7 | 3,4 | 0,58 | 0,43 | 146 | 95 | 2,3 | 170 | 175 | ++ | ++ |
| VB 1 | 90 | 110 | 3,2 | 2,6 | >1 | 0,44 | 20 | 85 | 1,7 | 185 | 180 | - | - |
| VB 2 | 105 | - | 0,97 | | 0,49 | | 70 | 20 | 22,5 | 140 | | - | - |
| VB 3 | 103 | - | 4,125 | | 0,63 | >1 | ≈25 | 20 | 2,7 | 140 | | - | - |
| VB 4 | 100 | - | 4 | | 0,65 | 0,8 | ≈65 | 30 | 1,5 | 140 | | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

+: mittlere Herstellkosten

-: Klebeneigung an Walzen oder anderen mechanischen Teilen, Blockprobleme beim Wickeln und bei der Verarbeitung auf Verpackungsmaschinen, hohe Herstellkosten durch aufwändiges Handling der Folie in den Maschinen

EP 1 380 415 B1

**Patentansprüche**

1. Koextrudierte, biaxial orientierte, siegelfähige Polyesterfolie mit mindestens einer Basisschicht (B), einer siegelfähigen Deckschicht (A) auf der einen Oberfläche der Basisschicht (B) und einer metallisierten oder keramisch beschichteten Deckschicht (C) auf der anderen Oberfläche der Basisschicht (B), wobei die siegelfähige Deckschicht (A) eine Siegelanspringtemperatur (fin) von nicht mehr als 110 °C und eine Siegelnahtfestigkeit (fin) von mindestens 1,3 N/15 mm Folienbreite aufweist und die beiden Deckschichten (A) und (C) durch die folgenden Merkmale **gekennzeichnet** sind:

   Siegelfähige Deckschicht (A):

   a) enthält Partikel aus synthetischem $SiO_2$ in einer Konzentration von 500 bis 5000 ppm mit einem mittleren Partikeldurchmesser $d_{50}$ von 2,5 bis 10 $\mu$m, der eine SPAN98 aufweist, die kleiner/gleich 1,80 ist, weist eine Rauhigkeit $R_a$ von größer als 60 nm auf,
   b) weist einen Reibungskoeffizienten A-Seite /A-Seite auf, der kleiner als 0,8 ist Nicht siegelfähige Deckschicht (C):
   c) enthält Partikel aus synthetischem und amorphem $SiO_2$ in einer Konzentration von größer 1000 bis 5000 ppm mit einem mittleren Partikeldurchmesser $d_{50}$ von 1,5 bis 6 $\mu$m, der eine SPAN98 aufweist, die kleiner/gleich 2,0 ist,
   d) weist eine Rauhigkeit $R_a$ auf, die zwischen $30 \leq R_a \leq 150$ nm liegt,
   e) weist einen Reibungskoeffizienten C-Seite /C-Seite auf, der kleiner als 0,6 ist,
   f) ist mit einem Metall oder keramischen Material beschichtet

2. Siegelfähige Polyesterfolie nach Anspruch 1, **dadurch gekennzeichnet, dass** die siegelfähige Deckschicht (A) einen amorphen Copolyester enthält, der aus Ethylenterephthalat- und Ethylenisophthalat-Einheiten und aus Ethylenglykol-Einheiten aufgebaut ist.

3. Siegelfähige Polyesterfolie nach Anspruch 2, **dadurch gekennzeichnet, dass** der amorphe Copolyester der siegelfähigen Deckschicht (A) Ethylenterephthalat in einem Anteil von 40 bis 95 Mol-% und Ethylenisophthalat in einem Anteil von 60 bis 5 Mol-% enthält.

4. Siegelfähige Polyesterfolie nach einem der Ansprüche 1 bis 3, **dadurch gekennzeichnet, dass** die siegelfähige Deckschicht (A) eine Dicke von größer als 0,5 $\mu$m aufweist.

5. Siegelfähige Polyesterfolie nach einem der Ansprüche 1 bis 4, **dadurch gekennzeichnet, dass** ihre Trübung im unmetallisierten Zustand kleiner als 3,0 ist.

6. Siegelfähige Polyesterfolie nach einem der Ansprüche 1 bis 5, **dadurch gekennzeichnet, dass** die Menge an Partikeln in der Basisschicht (B) niedriger ist als in den beiden Deckschichten (A) und (C).

7. Verfahren zum Herstellen einer siegelfähigen Polyesterfolie nach Anspruch 1, bei dem die Polymere für die Basisschicht (B) und die beiden Deckschichten (A) und (C) getrennten Extrudern zugeführt werden, etwa vorhandene Fremdkörper oder Verunreinigungen aus der Polymerschmelze vor der Extrusion durch geeignete Filter entfernt werden, die Schmelzen dann in einer Mehrschichtdüse zu flachen Schmelzefilmen ausgeformt und übereinander geschichtet werden, anschließend der Mehrschichtfilm mit Hilfe einer Kühlwalze und gegebenenfalls weiterer Walzen abgezogen, verfestigt und danach biaxial streckorientiert und hitzefixiert wird, wobei die biaxiale Streckung aufeinanderfolgend durchgeführt wird, wobei zuerst längs (in Maschinenrichtung) und dann quer (senkrecht zur Maschinenrichtung) gestreckt wird, **dadurch gekennzeichnet, dass** die Längsstreckung bei einer Temperatur im Bereich von 80 bis 130 °C und die Querstreckung im Bereich von 90 bis 150 °C durchgeführt wird und dass das Längsstreckverhältnis im Bereich von 2,5:1 bis 6:1, und das Querstreckverhältnis im Bereich von 3,0:1 bis 5,0:1 liegt.

8. Verfahren nach Anspruch 7, **dadurch gekennzeichnet, dass** nach der Längsstreckung und vor der Querstreckung eine oder beide Oberfläche(n) der Folie nach dem In-line-Verfahren beschichtet wird/werden.

9. Verwendung einer siegelfähigen Polyesterfolie nach einem der Ansprüche 1 bis 5 auf schnelllaufenden Verpackungsmaschinen.

10. Verwendung einer siegelfähigen Polyesterfolie nach einem der Ansprüche 1 bis 5 bei der Verarbeitung auf Anlagen, die unter Anwendung eines Vakuums arbeiten.

11. Verwendung einer siegelfähigen Polyesterfolie nach einem der Ansprüche 1 bis 5 als Verpackungsfolie.

**Claims**

1. A coextruded, biaxially oriented, sealable polyester film with at least one base layer (B), with a sealable outer layer (A) on one surface of the base layer (B), and with a metalized or ceramic-coated outer layer (C) on the other surface of the base layer (B), where the sealable outer layer (A) has a minimum sealing temperature (fin) of not more than 110°C and a seal seam strength (fin) of at least 1.3 N/15 mm of film width, and where the two outer layers (A) and (C) are **characterized by** the following features:

   sealable outer layer (A):

   a) comprises particles composed of synthetic $SiO_2$ at a concentration of from 500 to 5000 ppm, with a median particle diameter $d_{50}$ of from 2.5 to 10 $\mu$m, the SPAN98 of the diameter being less than or equal to 1.80, and has a roughness $R_a$ greater than 60 nm,
   b) has a side A/side A coefficient of friction which is smaller than 0.8, non-sealable outer layer (C):
   c) comprises particles composed of synthetic and amorphous $SiO_2$ at a concentration of from above 1000 to 5000 ppm with a median particle diameter $d_{50}$ of from 1.5 to 6 $\mu$m, the SPAN98 of the diameter being less than or equal to 2.0,
   d) has a roughness $R_a$ such that $30 \leq R_a \leq 150$ nm,
   e) has a side C/side C coefficient of friction which is smaller than 0.6,
   f) is coated with a metal or ceramic material.

2. The sealable polyester film as claimed in claim 1, wherein the sealable outer layer (A) comprises an amorphous copolyester which is composed of ethylene terephthalate units and of ethylene isophthalate units, and of ethylene glycol units.

3. The sealable polyester film as claimed in claim 2, wherein the amorphous copolyester of the sealable outer layer (A) contains from 40 to 95 mol% of ethylene terephthalate and from 60 to 5 mol% of ethylene isophthalate.

4. The sealable polyester film as claimed in any of claims 1 to 3, wherein the thickness of the sealable outer layer (A) is greater than 0.5 $\mu$m.

5. The sealable polyester film as claimed in any of claims 1 to 4, whose haze in the unmetalized state is less than 3.0.

6. The sealable polyester film as claimed in any of claims 1 to 5, wherein the amount of particles in the base layer (B) is smaller than in the two outer layers (A) and (C).

7. A process for producing a sealable polyester film as claimed in claim 1, in which the polymers for the base layer (B) and the two outer layers (A) and (C) are fed to separate extruders, any foreign body or contamination present is removed from the polymer melt by suitable filters prior to extrusion, and the melts are then shaped within a coextrusion die to give flat melt films and are brought in contact with one another to form layers, and then the multilayer film is drawn off with the aid of a chill roll and, where appropriate, of other rolls, and is solidified, and then is biaxially stretch-oriented and heat-set, the biaxial stretching being carried out sequentially by first stretching longitudinally (in machine direction) and then transversely (perpendicularly to machine direction), which comprises carrying out the longitudinal stretching at a temperature in the range from 80 to 130°C and the transverse stretching in the range from 90 to 150°C, and comprises using a longitudinal stretching ratio in the range from 2.5:1 to 6:1 and a transverse stretching ratio in the range from 3.0:1 to 5.0:1.

8. The process as claimed in claim 7, wherein, after the longitudinal stretching and prior to the transverse stretching, one or both surface(s) of the film is/are coated by the in-line method.

9. The use of a sealable polyester film as claimed in any of claims 1 to 5 on high-speed packaging machinery.

10. The use of a sealable polyester film as claimed in any of claims 1 to 5 for processing on systems which operate in a vacuum.

**11.** The use of a sealable polyester film as claimed in any of claims 1 to 5 as a packaging film.

## Revendications

**1.** Film de polyester soudable, orienté biaxialement, coextrudé, comportant au moins une couche de base (B), une couche de recouvrement soudable (A) sur l'une des faces de la couche de base (B) et une couche de recouvrement (C) métallisée ou à revêtement céramique sur l'autre face de la couche de base (B), la couche de recouvrement soudable (A) ayant une température de début de soudage (ailette (« fin »)) n'excédant pas 110 °C et une résistance du joint soudé (ailette (« fin »)) d'au moins 1,3 N/15 mm de largeur de film et les deux couches de recouvrement (A) et (C) étant **caractérisées par** les caractéristiques suivantes :

couche de recouvrement soudable (A) :

a) contient des particules de $SiO_2$ synthétique à une concentration de 500 à 5 000 ppm, avec un diamètre moyen de particule $d_{50}$ de 2,5 à 10 $\mu$m, qui présente une valeur SPAN98 qui est inférieure ou égale à 1,80, présente une rugosité $R_a$ de plus de 60 nm,
b) présente un coefficient de frottement face A/face A qui est inférieur à 0,8, Couche de recouvrement non soudable (C)
c) contient des particules de $SiO_2$ synthétique et amorphe à une concentration de plus de 1 000 à 5 000 ppm, avec un diamètre moyen de particule $d_{50}$ de 1,5 à 6 $\mu$m, qui présente une valeur SPAN98 qui est inférieure ou égale à 2,0,
d) présente une rugosité $R_a$ qui est comprise entre $30 \leq R_a \leq 150$ nm,
e) présente un coefficient de frottement face C/face C qui est inférieur à 0,6,
f) est revêtue d'un métal ou d'un matériau céramique.

**2.** Film de polyester soudable selon la revendication 1, **caractérisé en ce que** la couche de recouvrement soudable (A) contient un copolyester amorphe qui est constitué de motifs éthylène-téréphtalate et éthylène-isophtalate et de motifs éthylèneglycol.

**3.** Film de polyester soudable selon la revendication 2, **caractérisé en ce que** le copolyester amorphe de la couche de recouvrement soudable (A) contient de l'éthylène-téréphtalate en une proportion de 40 à 95 % en moles et de l'éthylène-isophtalate en une proportion de 60 à 5 % en moles.

**4.** Film de polyester soudable selon l'une quelconque des revendications 1 à 3, **caractérisé en ce que** la couche de recouvrement soudable (A) a une épaisseur de plus de 0,5 $\mu$m.

**5.** Film de polyester soudable selon l'une quelconque des revendications 1 à 4, **caractérisé en ce que** son opacité à l'état non métallisé est inférieure à 3,0.

**6.** Film de polyester soudable selon l'une quelconque des revendications 1 à 5, **caractérisé en ce que** la quantité de particules dans la couche de base (B) est inférieure à celle dans les deux couches de recouvrement (A) et (C).

**7.** Procédé de fabrication d'un film de polyester soudable selon la revendication 1, dans lequel les polymères pour la couche de base (B) et les deux couches de recouvrement (A) et (C) sont envoyés à des extrudeuses séparées, des corps étrangers éventuellement présents ou des impuretés éventuellement présentes provenant de la masse fondue de polymère sont éliminés au moyen de filtres appropriés avant l'extrusion, les masses fondues sont ensuite mises en forme de films extrudés plats à la sortie d'une extrudeuse multicouche et superposées, le film multicouche est ensuite tiré à l'aide d'un cylindre refroidisseur et éventuellement d'autres cylindres, solidifié et ensuite orienté par étirage biaxial et thermofixé, l'étirage biaxial s'effectuant successivement, par étirage d'abord dans le sens longitudinal (dans le sens de la machine) et ensuite transversalement (perpendiculairement au sens de la machine), **caractérisé en ce qu'**un étirage longitudinal est effectué à une température dans la plage de 80 à 130°C et un étirage transversal est effectué dans la plage de 90 à 150°C et **en ce que** le rapport d'étirage longitudinal se situe dans la plage de 2,5:1 à 6:1, et le rapport d'étirage transversal se situe dans la plage de 3,0:1 à 5,0:1.

**8.** Procédé selon la revendication 7, **caractérisé en ce qu'**après l'étirage longitudinal, et avant l'étirage transversal, une face ou les deux du film est/sont revêtue(s) selon le procédé en ligne.

9. Utilisation d'un film de polyester soudable selon l'une quelconque des revendications 1 à 5, sur des machines d'emballage à grande vitesse.

10. Utilisation d'un film de polyester soudable selon l'une quelconque des revendications 1 à 5, pour l'emballage d'unités qui fonctionnent avec utilisation d'un vide.

11. Utilisation d'un film de polyester soudable selon l'une quelconque des revendications 1 à 5, en tant que film d'emballage.

Fig. 1

Fig. 2

**Fig. 3**